# FASCICULE DE BREVET EUROPEEN

(11) **EP 3 626 632 B1**
(45) Date de publication et mention de la délivrance du brevet: **23.12.2020**
(21) Numéro de dépôt: 19197096.1
(22) Date de dépôt: 12.09.2019
(51) Int. Cl.: B64F 5/60, H04Q 9/00, B64D 45/00

(54) **SYSTÈME DE COLLECTE ET D'ANALYSE DE DONNÉES RELATIVES À UN AÉRONEF**
SAMMEL- UND ANALYSEVERFAHREN VON DATEN EINES LUFTFAHRZEUGS
SYSTEM FOR COLLECTING AND ANALYSING DATA RELATING TO AN AIRCRAFT

(30) Priorité: 18.09.2018 FR 1858389
(43) Date de publication de la demande: 25.03.2020
(73) Titulaire: AIRBUS OPERATIONS (S.A.S.), 31060 Toulouse (FR)
(72) Inventeur: ROUX-PORTALEZ, Fabien, 31060 Toulouse Cedex 9 (FR); CUMER, David, 31060 Toulouse Cedex 9 (FR); CARBONNE, Serge, 31060 Toulouse Cedex 9 (FR)
(74) Mandataire: Gicquel, Olivier Yves Gérard

(56) Documents cités:
- WO-A1-2015/013307
- US-A1- 2006 004 499
- US-A1- 2008 228 331
- US-A1- 2011 043 382
- US-B2- 8 344 912

## Description

### DOMAINE TECHNIQUE

La présente invention concerne un système de collecte et d'analyse de données relatives à des critères de sécurité et de confort d'un aéronef.

### ÉTAT DE LA TECHNIQUE

De façon usuelle, avant sa livraison à un client ou au cours d'opérations de révision, on fait effectuer à un aéronef, notamment un avion de transport, des vols de test. Au cours de ces vols de test, on acquiert des données qui, une fois analysées, permettent de vérifier si l'aéronef remplit des critères de sécurité et de confort.

Généralement, l'évaluation de ces critères se base sur l'acquisition et l'analyse, par un système dédié, de données relatives à des paramètres de l'aéronef les plus précises possibles. Il peut s'agir de paramètres tels que la vitesse, l'altitude de l'aéronef pendant le vol de test mais également le bruit ou les vibrations à l'intérieur de l'aéronef. La collecte et l'analyse de ces données permettent de décider si des améliorations doivent être réalisées avant la livraison ou la remise en service de l'aéronef.

La collecte et l'acquisition de données permettant de vérifier si un aéronef remplit des critères de sécurité et de confort peuvent être mises en œuvre par différents systèmes. En particulier, les critères de confort et de sécurité relatifs aux bruits et aux vibrations dans l'aéronef sont évalués, en général, à partir de mesures réalisées par un système comprenant, généralement, un ordinateur additionnel placé dans le cockpit et connecté à un bus avionique afin d'enregistrer avant et pendant le vol de test de l'aéronef des informations de base et des valeurs de paramètres de vol de l'aéronef tels que la vitesse, l'altitude, la pression, ... Au cours du vol de test, un opérateur utilise un dispositif de mesure qui comprend un microphone fournissant des mesures analogiques du bruit, ainsi qu'un thermocouple et un capteur de pression analogique pour mesurer la température et la pression dans l'aéronef. L'opérateur peut également mesurer les vibrations dans l'aéronef en connectant, par un câble, deux accéléromètres au dispositif de mesure. Ce type de mesure de vibration ne s'effectue pas de manière continue et peut prendre jusqu'à cinq minutes. L'opérateur se déplace alors, avec le dispositif de mesure, en différents endroits de l'aéronef pour effectuer un nombre suffisant de mesures. Après le vol de test, les valeurs mesurées par le dispositif de mesure ainsi que des enregistrements de valeurs mesurées lors de vols de test antérieurs sont téléchargés par l'opérateur dans l'ordinateur additionnel, puis transférés sur un serveur externe. L'ensemble de ces valeurs de mesure et de paramètres de vol sont disponibles pour une analyse ultérieurement.

Cette solution usuelle nécessite de multiples étapes de conversion et de transfert de données qui peuvent être chronophages.

Cette solution usuelle n'est donc pas complètement satisfaisante.

Le document WO2015/013307 A1 décrit un système de génération automatique de fichiers de vol et de listes de codes de transpondeur relatifs à un aéronef.

### EXPOSÉ DE L'INVENTION

La présente invention a pour but de remédier à ces inconvénients. Elle concerne un système de collecte et d'analyse de données relatives à des critères de sécurité et de confort d'un aéronef.

Selon l'invention, le système de collecte et d'analyse de données comprend :
- une unité d'acquisition configurée pour acquérir des informations de base de l'aéronef avant un vol dudit aéronef et des valeurs de paramètres de vol pendant le vol dudit aéronef, lesdites informations de base et lesdites valeurs de paramètres de vol formant un premier ensemble de données numériques ;
- une unité de mesure configurée pour mesurer des valeurs de paramètres environnementaux de l'aéronef pendant le vol dudit aéronef et pour enregistrer un second ensemble de données numériques représentatives desdites valeurs de paramètres environnementaux ;
- une unité d'analyse configurée pour analyser lesdits premier et second ensembles de données numériques ;
- un premier système de communication hertzienne configuré pour transmettre des ensembles de données numériques entre l'unité d'acquisition et l'unité de mesure ; et
- un deuxième système de communication hertzienne configuré pour transmettre des ensembles de données numériques entre l'unité de mesure et l'unité d'analyse.
Le système est remarquable en ce que l'unité de mesure comprend un premier module de commande configuré pour émettre un ordre d'enregistrement desdits premier et second ensembles de données numériques dans un module d'enregistrement et un ordre de transmission desdits premier et second ensembles de données numériques par le deuxième système de communication hertzienne, de l'unité de mesure vers l'unité d'analyse.

Ainsi, grâce à l'invention, on dispose d'un système permettant une collecte et une analyse des données rapides. En effet, les données mesurées par l'unité de mesure, à savoir ledit second ensemble de données numériques, sont directement enregistrées dans un format numérique ce qui facilite leur enregistrement et leur transfert vers l'unité d'analyse.

Avantageusement, l'unité de mesure comprend au moins l'un des capteurs suivants :
- un capteur de bruit, configuré pour mesurer des valeurs de bruit et fournir des données numériques de bruit représentatives desdites valeurs de bruit ;
- un capteur de vibration, configuré pour mesurer des valeurs de vibration et fournir des données numériques de vibration représentatives desdites valeurs de vibration ; et
- un capteur de paramètres hygrométriques, configuré pour mesurer des valeurs d'au moins l'un des paramètres hygrométriques suivants :
   - une température ;
   - une humidité ; et
   - une pression ;
et fournir des données numériques hygrométriques représentatives desdites valeurs de paramètres hygrométriques,
ladite unité de mesure comprenant également un module d'enregistrement configuré pour enregistrer au moins l'une desdites données numériques de bruit, de vibration et hygrométriques, le second ensemble de données numériques comportant au moins l'une desdites données numériques.

Dans un mode de réalisation particulier, l'unité de mesure comprend également un capteur de qualité d'air, configuré pour mesurer des valeurs de paramètres de qualité d'air et enregistrer des données numériques de qualité d'air représentatives des valeurs des paramètres de qualité d'air, lesdites données numériques de qualité d'air étant comprises dans le second ensemble de données numériques.

De plus, de façon avantageuse, l'unité de mesure comprend également une horloge.

Par ailleurs, avantageusement, l'unité de mesure comprend également un accumulateur d'énergie, ledit accumulateur d'énergie étant rechargeable par l'un des moyens suivants :
- induction ;
- port USB (« Universal Serial Bus » en anglais).

De préférence, le système comprend également une unité de visualisation configurée pour visualiser au moins certaines des données numériques de bruit reçues de l'unité de mesure via un troisième système de communication hertzienne.

De manière avantageuse, l'unité de visualisation comprend également un second module de commande configuré pour émettre, via le troisième système de communication hertzienne, un ordre d'enregistrement dudit second ensemble de données numériques dans un module d'enregistrement de l'unité de mesure et un ordre de transmission desdits premier et second ensembles de données numériques par le deuxième système de communication hertzienne, de l'unité de mesure vers l'unité d'analyse.

Par ailleurs, l'unité d'analyse comprend une base de données comprenant une pluralité de modèles d'environnement pourvus de valeurs seuil prédéterminées et un module de comparaison apte à comparer des données numériques de bruit et de vibration avec au moins certains desdits modèles d'environnement et à émettre un signal en fonction du résultat de la comparaison.

En outre, dans une première variante, l'unité d'analyse est intégrée dans l'unité de mesure et dans une seconde variante, l'unité d'analyse et l'unité de mesure sont deux unités distinctes.

De préférence, le premier système de communication hertzienne comprend au moins un premier élément de transmission agencé dans l'unité d'acquisition et un deuxième élément de transmission agencé dans l'unité de mesure.

Par ailleurs, de manière avantageuse, le deuxième système de communication hertzienne comprend au moins un troisième élément de transmission agencé dans l'unité d'acquisition et un quatrième élément de transmission agencé dans l'unité de mesure.

En outre, avantageusement, le troisième système de communication hertzienne comprend un cinquième élément de transmission agencé dans l'unité de visualisation et un sixième élément de transmission agencé dans l'unité de mesure.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est le schéma synoptique d'un mode de réalisation particulier d'un système de collecte et d'analyse de données conforme à l'invention; et
- la figure 2 illustre schématiquement une unité de mesure du système de collecte et d'analyse de données dans un mode de réalisation préféré.

### DESCRIPTION DÉTAILLÉE

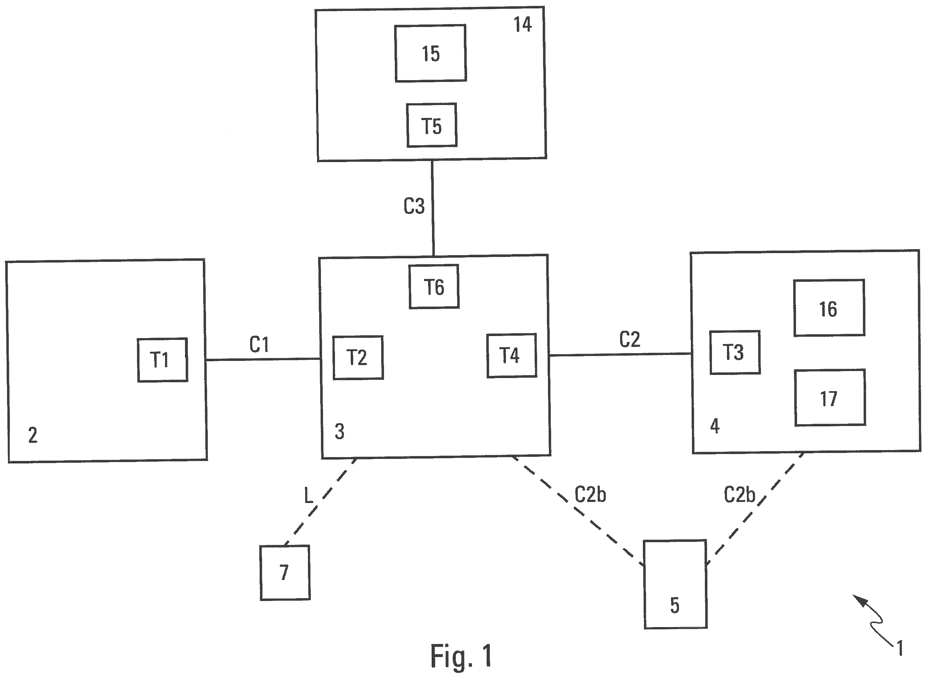

Le système de collecte et d'analyse de données 1 (ci-après « système 1 »), représenté schématiquement dans un mode de réalisation particulier sur la figure 1, est destiné à collecter puis à analyser des données relatives à des critères de sécurité et de confort d'un aéronef, en particulier un avion de transport. Ces données sont généralement collectées au cours d'au moins un vol de test de l'aéronef. On entend par vol de test, un vol de l'aéronef au cours duquel différents paramètres relatifs au confort et à la sécurité de l'aéronef sont mesurés.

Dans le mode de réalisation illustré de la figure 1, le système 1 comprend :
- une unité d'acquisition 2 qui est configurée pour collecter des informations de base et des valeurs de paramètres de vol de l'aéronef. Ces informations de base et ces valeurs de paramètres de vol forment un premier ensemble de données numériques ;
- une unité de mesure 3 qui est configurée pour mesurer des valeurs de paramètres environnementaux à l'intérieur de l'aéronef au cours du vol de test. L'unité de mesure 3 enregistre, de préférence dans une mémoire (non représentée) intégrée à l'unité de mesure 3, ces valeurs mesurées sous la forme d'un second ensemble de données numériques ;
- une unité d'analyse 4 qui est configurée pour analyser des données numériques, en particulier les premier et second ensembles de données numériques reçus de l'unité d'acquisition 2 et de l'unité de mesure 3. L'unité d'analyse 4 compare ces premier et second ensembles de données numériques à des valeurs seuil prédéterminées qui sont caractéristiques de critères de sécurité et de confort.

Le système 1 comprend, de plus, un système de communication C1 par voie hertzienne. Ce système de communication C1, qui est un réseau sans fil, est configuré pour transmettre des données et notamment le premier ensemble de données numériques entre l'unité d'acquisition 2 et l'unité de mesure 3. Le système de communication C1 comprend au moins un élément de transmission T1 agencé dans l'unité d'acquisition 2 et un élément de transmission T2 agencé dans l'unité de mesure 3.

Dans un mode de réalisation préféré représenté sur la figure 1, le système de communication C1 est un système radioélectrique de courte portée de type WIFI (« Wireless Fidelity » en anglais), qui transfère le premier ensemble de données numériques de l'élément de transmission T1 dans l'unité d'acquisition 2 vers l'élément de transmission T2 dans l'unité de mesure 3.

En outre, le système 1 comprend, de plus, un système de communication C2 par voie hertzienne, configuré pour transmettre des données et en particulier les premier et second ensembles de données numériques, entre l'unité de mesure 3 et l'unité d'analyse 4.

Le système de communication C2 comprend au moins un élément de transmission T3 agencé dans l'unité d'analyse 4 et un élément de transmission T4 agencé dans l'unité de mesure 3. Dans un premier mode de réalisation, l'élément de transmission T2 et l'élément de transmission T4 sont un seul et même élément de transmission. Dans une variante, l'élément de transmission T2 et l'élément de transmission T4 sont des éléments de transmission différents.

Dans un mode de réalisation préféré, le système de communication C2 est un réseau de téléphonie mobile, de préférence de type 4G. Plus particulièrement, le système de communication C2 transfère les premier et second ensembles de données numériques de l'élément de transmission T2 vers l'élément de transmission T3. Il transmet également des données numériques relatives à la mise à jour de l'unité de mesure 3 de l'élément de transmission T3 vers l'élément de transmission T4.

En complément ou en variante du mode de réalisation préféré précité, et comme représenté sur la figure 1 par des tirets, la transmission des premier et second ensembles de données numériques est réalisée par un système de communication C2b auxiliaire. Ce système de communication C2b est un système radioélectrique de courte portée de type WIFI, qui comprend une antenne relais 5 par laquelle transitent les premier et second ensembles de données numériques entre l'élément de transmission T4 et l'élément de transmission T3. À titre d'exemple, l'antenne relais 5 est agencée sur un bâtiment d'un aéroport sur lequel se trouve l'aéronef.

Par ailleurs, dans un mode de réalisation préféré, l'unité d'acquisition 2 est un ordinateur portable agencé dans le cockpit de l'aéronef et connecté à un bus avionique. Avant le vol de test de l'aéronef, l'unité d'acquisition 2 collecte des informations de base de l'aéronef. Ces informations de base peuvent être le numéro de série, le type de l'aéronef... Elles sont enregistrées dans l'unité d'acquisition 2 de façon manuelle par un opérateur. Dans une variante, elles sont enregistrées dans l'unité d'acquisition 2 de façon automatique. Des valeurs de paramètres de vol tels que la pression, la vitesse ou l'altitude de l'aéronef sont également collectées et enregistrées par l'unité d'acquisition 2 au cours du vol de test de l'aéronef, de façon automatique. Le premier ensemble de données numériques comporte, notamment, les informations de base et les valeurs de paramètres de vol.

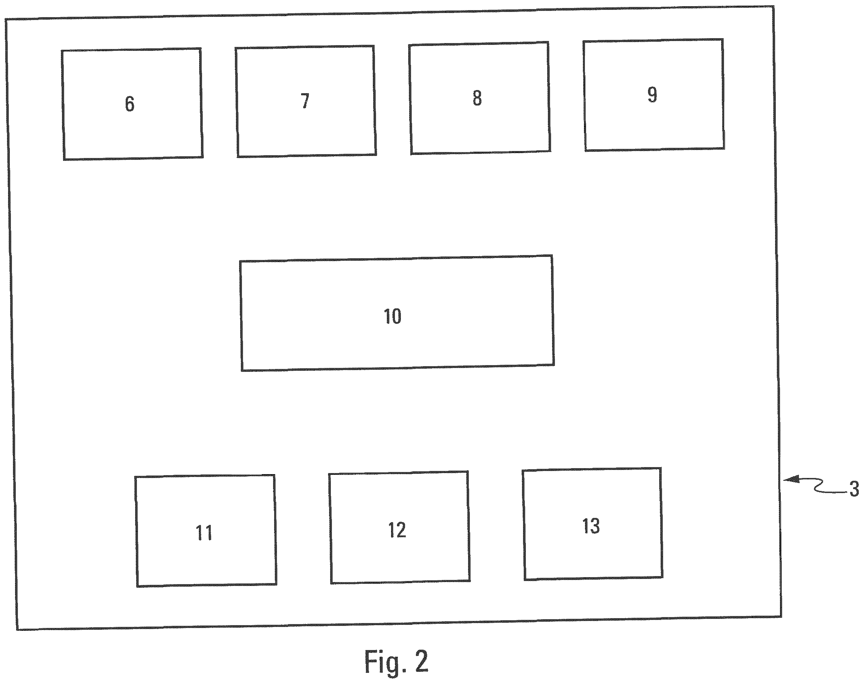

Comme représenté sur la figure 2, l'unité de mesure 3 comprend une pluralité de capteurs dont :
- un capteur de bruit 6 qui mesure des valeurs de bruit à l'intérieur de l'aéronef, au cours du vol de test de l'aéronef. À titre d'exemple, le capteur de bruit 6 est un microphone. Ce microphone comprend une capsule acoustique de classe 1. Les valeurs mesurées par le capteur de bruit 6 sont directement transformées en des données numériques de bruit ;
- un capteur de vibration 7 qui mesure des valeurs de vibration à l'intérieur de l'aéronef. Dans un mode de réalisation préféré, le capteur de vibration 7 est un microsystème électromécanique intégré dans l'unité de mesure 3 et comprenant un accéléromètre tri-axe. Ce capteur de vibration 7 peut fonctionner de manière autonome. Il n'est donc pas nécessaire pour un opérateur de rester à côté du capteur de vibration 7 au cours des mesures. Les valeurs mesurées par le capteur de vibration 7 sont converties directement en des données numériques de vibration. Au lieu d'être intégré dans l'unité de mesure 3, le capteur de vibration 7 est, dans une variante, installé dans l'aéronef et relié à l'unité de mesure 3 par une liaison L, comme représenté par des tirets sur la figure 1. La liaison L est de type filaire ; et
- un capteur de paramètres hygrométriques 8. Ce capteur de paramètres hygrométriques 8 est un microsystème électromécanique. Il peut mesurer la température, l'humidité et/ou la pression dans l'aéronef au cours du vol de test. De plus, les valeurs mesurées des paramètres hygrométriques sont directement enregistrées sous forme de données numériques hygrométriques.

Dans un mode de réalisation particulier, l'unité de mesure 3 comprend également un capteur de qualité d'air 9. Ce capteur de qualité d'air 9 est, de préférence, agencé dans le microsystème électromécanique comprenant le capteur de paramètres hygrométriques 8 et le capteur de vibration 7. Le capteur de qualité d'air 9 mesure des valeurs de paramètres caractéristiques de la qualité de l'air à l'intérieur de l'aéronef. Le capteur de qualité d'air 9 fournit des données numériques représentatives des valeurs mesurées des paramètres de qualité d'air.

Par ailleurs, l'unité de mesure 3 comprend un module d'enregistrement 10 qui enregistre les données numériques fournies par le capteur de bruit 6, le capteur de vibration 7, le capteur de paramètres hygrométriques 8 et le capteur de qualité d'air 9. Le second ensemble de données numériques comporte ces données numériques enregistrées.

De plus, le module d'enregistrement 10 enregistre également le premier ensemble de données numériques, transmis par le système de communication C1 et reçu par l'élément de transmission T2 de l'unité de mesure 3.

Dans un mode de réalisation, l'unité de mesure 3 comprend également une horloge 11. L'horloge 11 peut être mise à l'heure par la réception de données émises par un système de positionnement par satellites de type GPS (« Global Positioning System » en anglais). Dans une variante, l'horloge 11 de l'unité de mesure 3 est synchronisée à une horloge atomique par la réception de données par l'élément de transmission T4 de l'unité de mesure 3.

En outre, comme représenté sur la figure 2, l'unité de mesure 3 comprend également un accumulateur d'énergie 12 qui est rechargeable. L'accumulateur d'énergie 12 rend autonome l'utilisation de l'unité de mesure 3. Dans une première variante, l'accumulateur d'énergie 12 est rechargeable sur une plaque de transmission d'énergie par induction. Dans une seconde variante, l'accumulateur d'énergie 12 est rechargeable par la connexion de l'unité de mesure 3 à un port USB.

L'unité de mesure 3 comprend également un module de commande 13 configuré pour commander l'enregistrement et la transmission de données numériques. Un ordre d'enregistrement émis par le module de commande 13 commande l'enregistrement des premier et second ensembles de données numériques dans le module d'enregistrement 10. Dans un mode de réalisation préféré, l'enregistrement du second ensemble de données est réalisé en temps réel, après chaque mesure de valeurs effectuée par le capteur de bruit 6, le capteur de vibration 7, le capteur de paramètres hygrométriques 8 et le capteur de qualité d'air 9. Dans une variante, l'enregistrement du second ensemble de données numériques est réalisé à la fin du vol de test de l'aéronef, lorsque toutes les mesures ont été effectuées par les capteurs. Le module de commande 13 permet à un opérateur d'émettre également un ordre commandant la transmission des premier et second ensembles de données numériques de l'unité de mesure 3 vers l'unité d'analyse 4.

Dans un mode de réalisation préféré, le système 1 comprend de plus une unité de visualisation 14, comme représenté sur la figure 1. L'unité de visualisation 14 est un écran configuré pour visualiser au moins certaines des données numériques de bruit représentatives des valeurs mesurées du bruit. De préférence, cette unité de visualisation 14 est une tablette. Les données numériques visualisées sur l'écran sont transmises de l'unité de mesure 3 à l'unité de visualisation 14 par un système de communication C3 sans fil. Ce système de communication C3 comprend un élément de transmission T5 agencé dans l'unité de visualisation 14 et un élément de transmission T6 agencé dans l'unité de mesure 3. Dans un mode de réalisation particulier, l'élément de transmission T6 est un élément différent de l'élément de transmission T2 ou de l'élément de transmission T4. Dans une variante, l'élément de transmission T6 et l'élément de transmission T2 ou l'élément de transmission T4 de l'unité de mesure 3 sont un seul et même élément de transmission.

Dans un mode de réalisation préféré, le système de communication C3 est un système de transmission d'ondes radio à courte portée de type Bluetooth. La transmission des données numériques de bruit par le système de communication C3 est réalisée au cours du vol de test de l'aéronef. La visualisation de certaines des données numériques de bruit, qui représentent un spectre acoustique en temps réel, permet à un opérateur d'identifier la présence ou l'absence de données erronées et donc de détecter un éventuel problème.

De plus, en complément, l'unité de visualisation 14 comprend un module de commande 15. Ce module de commande 15 permet à un opérateur d'émettre des ordres, via le système de communication C3, à l'unité de mesure 3. L'ordre d'enregistrement commande l'enregistrement, dans le module d'enregistrement 10, des données numériques des capteurs de l'unité de mesure 3. Le module de commande 15 permet d'émettre également un ordre de transmission de données. Cet ordre de transmission commande à l'unité de mesure 3 de transmettre les premier et second ensembles de données numériques (enregistrés dans le module d'enregistrement 10) vers l'unité d'analyse 4, via le système de communication C2, C2b.

Comme représenté sur la figure 1, l'unité d'analyse 4 est pourvue d'une base de données 16. Cette base de données 16 contient un ou plusieurs modèles d'environnement pourvus de valeurs seuil prédéterminées. Ces modèles d'environnement représentent des modèles représentatifs de spectres acoustiques dont la signification du comportement est déjà déterminée.

L'unité d'analyse 4 comprend également un module de comparaison 17. Ce module de comparaison 17 compare les données numériques de bruit et de vibration reçues via le système de communication C2 avec au moins un des modèles d'environnement contenus dans la base de données 16. En fonction du résultat de la comparaison, le module de comparaison 17 émet un signal.

Par ailleurs, dans un mode de réalisation particulier, l'unité d'analyse 4 et l'unité de mesure 3 sont deux unités distinctes. Cependant, dans une variante, l'unité d'analyse 4 est intégrée dans l'unité de mesure 3. La communication entre l'unité d'analyse 4 et l'unité de mesure 3 peut donc être filaire.

Le système 1 est principalement utilisé dans le cadre de processus de vérification de critères de sécurité et de confort d'un aéronef, par exemple, avant sa livraison à un client. Un exemple de fonctionnement du système 1 est le suivant.

Avant le décollage de l'aéronef, l'unité d'acquisition 2 est connectée, dans le cockpit de l'aéronef, au bus avionique afin de recevoir des informations de base. Ces informations de base concernent, notamment, le type de l'aéronef, son numéro de série... et sont enregistrées dans l'unité d'acquisition 2. En parallèle, l'horloge 11 de l'unité de mesure 3 est mise à l'heure. La mise à l'heure est effectuée, de préférence par la réception, par l'élément de transmission T4 agencé dans l'unité de mesure 3, de données émises par un réseau mobile de type 4G. En l'absence de réseau mobile de type 4G, la mise à l'heure est effectuée par la transmission de données d'un système de positionnement par satellites. Cette mise à l'heure de l'horloge 11 avec une horloge atomique permet de dater chaque donnée numérique issue d'une valeur mesurée par le capteur de bruit 6, le capteur de vibration 7, le capteur de paramètres hygrométriques 8 et le capteur de qualité d'air 9 avec une grande précision.

Lorsque l'aéronef commence son vol de test, les capteurs 6, 7, 8 et 9 de l'unité de mesure 3 débutent les mesures. En particulier, le capteur de bruit 6 collecte des valeurs de bruit via le microphone qui sont converties en données numériques de bruit. L'accéléromètre tri-axe du capteur de vibration 7 mesure les vibrations dans l'aéronef qui sont également converties en données numériques de vibration. Le microsystème électromécanique comprenant également le capteur de paramètres hygrométriques 8 et le capteur de qualité d'air 9 mesure, respectivement, des valeurs de paramètres hygrométriques telles que des valeurs de la température, de la pression et de l'humidité et des valeurs de qualité d'air dans l'aéronef. Toutes ces valeurs mesurées sont directement converties en données numériques ce qui entraîne un gain de temps avant leur transmission.

Au cours des mesures, une partie des données numériques de bruit, qui constituent le spectre acoustique, peuvent être transmises de l'élément de transmission T6 à l'élément de transmission T5 via le système de communication C3. L'unité de visualisation 14 permet alors à un opérateur de visualiser le spectre acoustique et d'identifier un éventuel problème.

Par ailleurs, les données numériques de bruit, les données numériques de vibration, les données numériques de paramètres hygrométriques et les données numériques de qualité d'air sont enregistrées dans le module d'enregistrement 10 de l'unité de mesure 3. L'enregistrement est commandé par le module de commande 15 de l'unité de visualisation 14 qui transmet un ordre d'enregistrement via le système de communication C3. L'ordre d'enregistrement peut également être commandé par un opérateur qui appuie sur un bouton agencé sur l'unité de mesure 3, ce qui active le module de commande 13.

Au cours du vol de test de l'aéronef, l'unité d'acquisition 2 collecte également des valeurs de paramètres de vol, en temps réel et de façon automatique. Ces paramètres de vol correspondent en particulier à l'altitude, à la vitesse et à la pression de l'aéronef. Ces valeurs de paramètres de vol sont enregistrées, en temps réel, dans une mémoire de l'unité d'acquisition 2 avec les informations de base collectées avant le vol de test.

À la fin du vol de test, l'aéronef atterrit sur un aéroport. L'élément de transmission T1 transfère à l'élément de transmission T2 les données numériques des informations de base et des valeurs de paramètres de vol qui forment le premier ensemble de données numériques, via le système de communication C1, qui peut être un réseau WIFI. Ce premier ensemble de données numériques est alors enregistré dans le module d'enregistrement 10 avec le second ensemble de données numériques.

Les premier et second ensemble de données numériques sont ensuite transmis vers l'unité d'analyse 4. L'ordre de transmission est commandé soit directement par le module de commande 13 de l'unité de mesure 3 au système de communication C2, C2b, soit par le module de commande 15 de l'unité de visualisation 14. Dans ce dernier cas, l'ordre de commande est d'abord transmis de l'élément de transmission T5 à l'élément de transmission T6 via le système de communication C3 puis via le système de communication C2, C2b.

De préférence, le système de communication C2, qui est par exemple un réseau mobile, transmet ces ensembles de données numériques à l'unité d'analyse 4. La transmission des premier et second ensembles de données numériques peut également être effectuée par le système de communication C2b qui est un réseau de type WIFI, c'est-à-dire de courte portée. Le système de communication C2b transmet alors les ensembles de données numériques depuis l'élément de transmission T4 de l'unité de mesure 3 vers une antenne relais 5. Cette antenne relais 5, qui doit être proche de la position de l'aéronef, est par exemple une antenne placée sur le toit d'un bâtiment de l'aéroport. Puis, les ensembles de données numériques sont transmis depuis l'antenne relais 5 vers l'élément de transmission T3 de l'unité d'analyse 4.

L'unité d'analyse 4 est pourvue d'une base de données 16 comprenant des modèles d'environnement. Ces modèles représentent des comportements du bruit et des vibrations qui ont déjà été analysés ou qui sont déjà identifiés. Ainsi, lorsque les ensembles de données numériques sont reçus par l'unité d'analyse 4, ils sont comparés par le module de comparaison 17 aux modèles de la base de données 16. Après analyse, le module de comparaison 17 émet un signal représentatif de la comparaison entre ces ensembles de données et notamment les valeurs seuil des modèles d'environnement.

Ainsi, le système 1 permet de collecter des valeurs de paramètres, notamment acoustiques et de vibrations avec une précision métrologique (inférieure à 1 mg) et de les convertir directement en données numériques, ce qui facilite leur transmission ultérieure pour analyse. Par ailleurs, l'écran de visualisation 14 permet à un opérateur de pouvoir identifier en temps réel, lors des mesures, si un problème survient.

## Revendications

1. Système de collecte et d'analyse de données relatives à des critères de sécurité et de confort d'un aéronef, ledit système (1) comprenant :
- une unité d'acquisition (2) configurée pour acquérir des informations de base de l'aéronef avant un vol dudit aéronef et des valeurs de paramètres de vol pendant le vol dudit aéronef, lesdites informations de base et lesdites valeurs de paramètres de vol formant un premier ensemble de données numériques ;
- une unité de mesure (3) configurée pour mesurer des valeurs de paramètres environnementaux de l'aéronef pendant le vol dudit aéronef et pour enregistrer un second ensemble de données numériques représentatives desdites valeurs de paramètres environnementaux ;
- une unité d'analyse (4) configurée pour analyser lesdits premier et second ensembles de données numériques ;
- un premier système de communication (C1) hertzienne configuré pour transmettre des ensembles de données numériques entre l'unité d'acquisition (2) et l'unité de mesure (3) ; et
- un deuxième système de communication (C2, C2b) hertzienne configuré pour transmettre des ensembles de données numériques entre l'unité de mesure (3) et l'unité d'analyse (4),
ledit système étant **caractérisé en ce que** l'unité de mesure (3) comprend un premier module de commande (13) configuré pour émettre un ordre d'enregistrement desdits premier et second ensembles de données numériques dans un module d'enregistrement (10) et un ordre de transmission desdits premier et second ensembles de données numériques par le deuxième système de communication (C2, C2b) hertzienne, de l'unité de mesure (3) vers l'unité d'analyse (4).

2. Système selon la revendication 1,
caractérisé en que l'unité de mesure (3) comprend au moins l'un des capteurs suivants :
- un capteur de bruit (6), configuré pour mesurer des valeurs de bruit et fournir des données numériques de bruit représentatives desdites valeurs de bruit ;
- un capteur de vibration (7), configuré pour mesurer des valeurs de vibration et fournir des données numériques de vibration représentatives desdites valeurs de vibration ; et
- un capteur de paramètres hygrométriques (8), configuré pour mesurer des valeurs d'au moins l'un des paramètres hygrométriques suivants :
• une température ;
• une humidité ; et
• une pression ;
et fournir des données numériques hygrométriques représentatives desdites valeurs de paramètres hygrométriques,
ladite unité de mesure (3) comprenant également un module d'enregistrement (10) configuré pour enregistrer au moins l'une desdites données numériques de bruit, de vibration et hygrométriques, le second ensemble de données numériques comportant au moins l'une desdites données numériques.

3. Système selon l'une quelconque des revendications 1 et 2,
**caractérisé en ce que** l'unité de mesure (3) comprend également un capteur de qualité d'air (9), configuré pour mesurer des valeurs de paramètres de qualité d'air et enregistrer des données numériques de qualité d'air représentatives des valeurs des paramètres de qualité d'air, lesdites données numériques de qualité d'air étant comprises dans le second ensemble de données numériques.

4. Système selon l'une quelconque des revendications 1 à 3,
**caractérisé en ce que** l'unité de mesure (3) comprend également une horloge (11).

5. Système selon l'une quelconque des revendications 1 à 4,
**caractérisé en ce que** l'unité de mesure (3) comprend également un accumulateur d'énergie (12), ledit accumulateur d'énergie (12) étant rechargeable par l'un des moyens suivants :
- induction ;
- port USB.

6. Système selon la revendication 2,
**caractérisé en ce qu'**il comprend également une unité de visualisation (14) configurée pour visualiser au moins certaines des données numériques de bruit reçues de l'unité de mesure (3) via un troisième système de communication (C3) hertzienne.

7. Système selon la revendication 6,
**caractérisé en ce que** l'unité de visualisation (14) comprend également un second module de commande (15) configuré pour émettre, via le troisième système de communication (C3) hertzienne, un ordre d'enregistrement dudit second ensemble de données numériques dans un module d'enregistrement (10) de l'unité de mesure (3) et un ordre de transmission desdits premier et second ensembles de données numériques par le deuxième système de communication (C2, C2b) hertzienne, de l'unité de mesure (3) vers l'unité d'analyse (4).

8. Système selon l'une quelconque des revendications précédentes,
**caractérisé en ce que** l'unité d'analyse (4) comprend une base de données (16) comprenant une pluralité de modèles d'environnement pourvus de valeurs seuil prédéterminées et un module de comparaison (17) apte à comparer des données numériques de bruit et de vibration avec au moins certains desdits modèles d'environnement et à émettre un signal en fonction du résultat de la comparaison.

9. Système selon l'une quelconque des revendications 1 à 8,
**caractérisé en ce que** l'unité d'analyse (4) est intégrée dans l'unité de mesure (3).

10. Système selon l'une quelconque des revendications 1 à 8,
**caractérisé en ce que** l'unité d'analyse (4) et l'unité de mesure (3) sont deux unités distinctes.

11. Système selon l'une quelconque des revendications précédentes, **caractérisé en ce que** le premier système de communication (C1) hertzienne comprend au moins un premier élément de transmission (T1) agencé dans l'unité d'acquisition (2) et un deuxième élément de transmission (T2) agencé dans l'unité de mesure (3).

12. Système selon l'une quelconque des revendications précédentes,
**caractérisé en ce que** le deuxième système de communication (C2) hertzienne comprend au moins un troisième élément de transmission (T3) agencé dans l'unité d'acquisition (2) et un quatrième élément de transmission (T4) agencé dans l'unité de mesure (3).

13. Système selon la revendication 6,
**caractérisé en ce que** le troisième système de communication (C3) hertzienne comprend un cinquième élément de transmission (T5) agencé dans l'unité de visualisation (14) et un sixième élément de transmission (T6) agencé dans l'unité de mesure (3).

## Patentansprüche

1. System zum Sammeln und Analysieren von Daten in Bezug auf Sicherheits- und Komfortkriterien eines Luftfahrzeugs, das System (1) umfassend:
- eine Erfassungseinheit (2), die dazu ausgebildet ist, Grundinformationen des Luftfahrzeugs vor einem Flug des Luftfahrzeugs und Flugparameterwerte während des Fluges des Luftfahrzeugs zu erfassen, wobei die Grundinformationen und die Flugparameterwerte eine erste Menge digitaler Daten bilden;
- eine Messeinheit (3), die dazu ausgebildet ist, Umgebungsparameterwerte des Luftfahrzeugs während des Fluges des Luftfahrzeugs zu messen und eine zweite Menge digitaler Daten, die für die Umgebungsparameterwerte repräsentativ sind, aufzuzeichnen;
- eine Analyseeinheit (4), die dazu ausgebildet ist, die erste und zweite Menge digitaler Daten zu analysieren;
- ein erstes Funkkommunikationssystem (C1), das dazu ausgebildet ist, Mengen digitaler Daten zwischen der Erfassungseinheit (2) und der Messeinheit (3) zu übertragen; und
- ein zweites Funkkommunikationssystem (C2, C2b), das dazu ausgebildet ist, Mengen digitaler Daten zwischen der Messeinheit (3) und der Analyseeinheit (4) zu übertragen, wobei das System **dadurch gekennzeichnet ist, dass** die Messeinheit (3) ein erstes Steuerungsmodul (13) umfasst, das dazu ausgebildet ist, einen Befehl zur Aufzeichnung der ersten und zweiten Menge digitaler Daten in einem Aufzeichnungsmodul (10) und einen Befehl zur Übertragung der ersten und zweiten Menge digitaler Daten durch das zweite Funkkommunikationssystem (C2, C2b) von der Messeinheit (3) zur Analyseeinheit (4), zu senden.

2. System nach Anspruch 1,
**dadurch gekennzeichnet, dass** die Messeinheit (3) mindestens einen der folgenden Sensoren umfasst:
- einen Geräuschsensor (6), der dazu ausgebildet ist, Geräuschwerte zu messen und digitale Geräuschdaten bereitzustellen, die für die Geräuschwerte repräsentativ sind;
- einen Vibrationssensor (7), der dazu ausgebildet ist, Vibrationswerte zu messen und digitale Vibrationsdaten bereitzustellen, die für die Vibrationswerte repräsentativ sind; und
- einen Sensor für hygrometrische Parameter (8), der dazu ausgebildet ist, Werte mindestens eines der folgenden hygrometrischen Parameter zu messen:
• eine Temperatur;
• eine Feuchte; und
• einen Druck;
und digitale hygrometrische Daten bereitzustellen, die für die hygrometrischen Parameterwerte repräsentativ sind,
wobei die Messeinheit (3) ebenfalls ein Aufzeichnungsmodul (10) umfasst, das dazu ausgebildet ist, mindestens eins von den digitalen Geräusch-, Vibrations- und hygrometrischen Daten aufzuzeichnen, wobei die zweite Menge digitaler Daten mindestens eins von den digitalen Daten aufweist.

3. System nach einem der Ansprüche 1 und 2, **dadurch gekennzeichnet, dass** die Messeinheit (3) ebenfalls einen Luftqualitätssensor (9) umfasst, der dazu ausgebildet ist, Luftqualitätsparameterwerte zu messen und digitale Luftqualitätsdaten aufzuzeichnen, die für die Werte der Luftqualitätsparameter repräsentativ sind, wobei die digitalen Luftqualitätsdaten in der zweiten Menge digitaler Daten enthalten sind.

4. System nach einem der Ansprüche 1 bis 3, **dadurch gekennzeichnet, dass** die Messeinheit (3) ebenfalls einen Taktgeber (11) umfasst.

5. System nach einem der Ansprüche 1 bis 4, **dadurch gekennzeichnet, dass** die Messeinheit (3) ebenfalls einen Energieakkumulator (12) umfasst, wobei der Energieakkumulator (12) durch eins der folgenden Mittel wieder aufgeladen werden kann:
- Induktion;
- USB-Anschluss.

6. System nach Anspruch 2, **dadurch gekennzeichnet, dass** es ebenfalls eine Visualisierungseinheit (14) umfasst, die dazu ausgebildet ist, zumindest einige der digitalen Geräuschdaten zu visualisieren, die von der Messeinheit (3) über ein drittes Funkkommunikationssystem (C3) empfangen werden.

7. System nach Anspruch 6, **dadurch gekennzeichnet, dass** die Visualisierungseinheit (14) ebenfalls ein zweites Steuerungsmodul (15) umfasst, das dazu ausgebildet ist, über das dritte Funkkommunikationssystem (C3) einen Befehl zur Aufzeichnung der zweiten Menge digitaler Daten in einem Aufzeichnungsmodul (10) der Messeinheit (3) und einen Befehl zur Übertragung der ersten und zweiten Menge digitaler Daten durch das zweite Funkkommunikationssystem (C2, C2b) von der Messeinheit (3) zur Analyseeinheit (4), zu senden.

8. System nach einem der vorhergehenden Ansprüche, **dadurch gekennzeichnet, dass** die Analyseeinheit (4) eine Datenbank (16) umfasst, die eine Mehrzahl von Umgebungsmodellen umfasst, die mit vorbestimmten Schwellenwerten versehen sind, und ein Vergleichsmodul (17), das geeignet ist, digitale Geräusch- und Vibrationsdaten mit zumindest einigen der Umgebungsmodelle zu vergleichen und je nach dem Ergebnis des Vergleichs ein Signal zu senden.

9. System nach einem der Ansprüche 1 bis 8, **dadurch gekennzeichnet, dass** die Analyseeinheit (4) in die Messeinheit (3) integriert ist.

10. System nach einem der Ansprüche 1 bis 8, **dadurch gekennzeichnet, dass** die Analyseeinheit (4) und die Messeinheit (3) zwei gesonderte Einheiten sind.

11. System nach einem der vorhergehenden Ansprüche, **dadurch gekennzeichnet, dass** das erste Funkkommunikationssystem (C1) mindestens ein erstes Übertragungselement (T1), das in der Erfassungseinheit (2) angeordnet ist, und ein zweites Übertragungselement (T2), das in der Messeinheit (3) angeordnet ist, umfasst.

12. System nach einem der vorhergehenden Ansprüche, **dadurch gekennzeichnet, dass** das zweite Funkkommunikationssystem (C2) mindestens ein drittes Übertragungselement (T3), das in der Erfassungseinheit (2) angeordnet ist, und ein viertes Übertragungselement (T4), das in der Messeinheit (3) angeordnet ist, umfasst.

13. System nach Anspruch 6, **dadurch gekennzeichnet, dass** das dritte Funkkommunikationssystem (C3) ein fünftes Übertragungselement (T5), das in der Visualisierungseinheit (14) angeordnet ist, und ein sechstes Übertragungselement (T6), das in der Messeinheit (3) angeordnet ist, umfasst.

## Claims

1. System for collecting and analysing data relating to safety and comfort criteria of an aircraft, said system (1) comprising:
- an acquisition unit (2), which is configured to acquire basic information regarding the aircraft before a flight of said aircraft and values of flight parameters during the flight of said aircraft, said basic information and said flight parameter values forming a first set of digital data;
- a measurement unit (3), which is configured to measure values of environmental parameters of the aircraft during the flight of said aircraft and to record a second set of digital data representative of said environmental parameter values;
- an analysis unit (4), which is configured to analyse said first and second sets of digital data;
- a first radio communication system (C1), which is configured to transmit sets of digital data between the acquisition unit (2) and the measurement unit (3); and
- a second radio communication system (C2, C2b), which is configured to transmit sets of digital data between the measurement unit (3) and the analysis unit (4),
said system being **characterized in that** the measurement unit (3) comprises a first control module (13), which is configured to transmit an order to record said first and second sets of digital data in a recording module (10) and an order to transmit said first and second sets of digital data, by means of the second radio communication system (C2, C2b), from the measurement unit (3) to the analysis unit (4).

2. System according to Claim 1,
**characterized in that** the measurement unit (3) comprises at least one of the following sensors:
- a noise sensor (6), which is configured to measure noise values and supply digital noise data representative of said noise values;
- a vibration sensor (7), which is configured to measure vibration values and supply digital vibration data representative of said vibration values; and
- a sensor (8) for hygrometric parameters, which is configured to measure the values of at least one of the following hygrometric parameters:
• a temperature;
• a humidity; and
• a pressure,
and supply digital hygrometric data representative of said hygrometric parameter values,
said measurement unit (3) also comprising a recording module (10), which is configured to record at least one of said digital noise, vibration and hygrometric data, the second set of digital data including at least one of said digital data.

3. System according to either one of Claims 1 and 2,
**characterized in that** the measurement unit (3) also comprises an air quality sensor (9), which is configured to measure values of air quality parameters and record digital air quality data representative of the values of the air quality parameters, said digital air quality data being included in the second set of digital data.

4. System according to any one of Claims 1 to 3,
**characterized in that** the measurement unit (3) also comprises a clock (11).

5. System according to any one of Claims 1 to 4,
**characterized in that** the measurement unit (3) also comprises an energy accumulator (12), said energy accumulator (12) being able to be charged by one of the following means:
- induction;
- a USB port.

6. System according to Claim 2,
**characterized in that** it also comprises a display unit (14), which is configured to display at least some of the digital noise data received from the measurement unit (3) via a third radio communication system (C3).

7. System according to Claim 6,
**characterized in that** the display unit (14) also comprises a second control module (15), which is configured to transmit, via the third radio communication system (C3), an order to record said second set of digital data in a recording module (10) of the measurement unit (3) and an order to transmit said first and second sets of digital data, by means of the second radio communication system (C2, C2b), from the measurement unit (3) to the analysis unit (4).

8. System according to any one of the preceding claims,
**characterized in that** the analysis unit (4) comprises a database (16) that comprises a plurality of environment models, which are provided with predetermined threshold values, and a comparison module (17), which is able to compare digital noise and vibration data with at least some of said environment models and to transmit a signal on the basis of the result of the comparison.

9. System according to any one of Claims 1 to 8,
**characterized in that** the analysis unit (4) is incorporated in the measurement unit (3).

10. System according to any one of Claims 1 to 8,
**characterized in that** the analysis unit (4) and the measurement unit (3) are two distinct units.

11. System according to any one of the preceding claims,
**characterized in that** the first radio communication system (C1) comprises at least a first transmission element (T1), which is arranged in the acquisition unit (2) and a second transmission element (T2), which is arranged in the measurement unit (3).

12. System according to any one of the preceding claims,
**characterized in that** the second radio communication system (C2) comprises at least a third transmission element (T3), which is arranged in the acquisition unit (2) and a fourth transmission element (T4), which is arranged in the measurement unit (3).

13. System according to Claim 6,
**characterized in that** the third radio communication system (C3) comprises a fifth transmission element (T5), which is arranged in the display unit (14) and a sixth transmission element (T6), which is arranged in the measurement unit (3).
